# EUROPÄISCHE PATENTSCHRIFT

(11) **EP 2 626 236 B1**
(45) Veröffentlichungstag und Bekanntmachung des Hinweises auf die Patenterteilung: **01.04.2020**
(21) Anmeldenummer: 12154890.3
(22) Anmeldetag: 10.02.2012
(51) Int. Cl.: B60N 2/30, B60N 2/22, B60R 21/02

(54) **Kraftfahrzeug mit einer Sitzbank**
Motor vehicle with a seating bench
Véhicule automobile doté d'un banc

(43) Veröffentlichungstag der Anmeldung: 14.08.2013
(73) Patentinhaber: Magna Steyr Fahrzeugtechnik AG & Co KG, 8041 Graz (AT)
(72) Erfinder: Aschaber, Christoph, 8020 Graz (AT); Auer, Thomas, 9363 Metnitz (AT); Erlacher, Manuel, 9545 Radenthein (AT); Rodler, Martin, 8160 Krottendorf (AT); Zachnegger, Harald, 8041 Graz (AT)
(74) Vertreter: Zangger, Bernd

(56) Entgegenhaltungen:
- DE-A1-102010 022 206
- DE-C- 699 589
- FR-A1- 2 803 565
- FR-A1- 2 874 867
- JP-A- 2008 105 547
- US-A- 3 703 310
- US-A1- 2005 116 522

## Beschreibung

Die vorliegende Erfindung betrifft ein Kraftfahrzeug mit einer Sitzbank, die eine in einer Normalstellung annähernd horizontale Sitzfläche und eine in der Normalstellung annähernd vertikale Lehne umfasst.

Derartige Sitzbänke für Kraftfahrzeuge sind allgemein bekannt.

Die DE 100 39 789 A1 offenbart ein Kraftfahrzeug mit einem Sitz oder einer Sitzbank wobei das Sitzkissen des Sitzes über eine im vorderen Endabschnitt des Sitzkissens angeordnete Schwenkachse zwischen einer Horizontalstellung und einer Vertikalstellung verstellbar gelagert ist. In der DE 100 39 789 A1 ist eine Trennwand vorgesehen, die am oder im Sitzkissen einfahrbar und ausfahrbar gelagert ist, wobei die Trennwand in einer Gebrauchsstellung nach oben vom Sitzkissen vorsteht. Die Rückenlehne ist dabei in eine Horizontalstellung verstellbar, in der die Rückseite der Rückenlehne etwa bündig an den Laderaumboden anschließt, so dass der Laderaumboden verlängert wird. Zur Bildung einer Abtrennung zwischen einem vorderen Innenraum und einem hinteren Innenraum ist in der DE 100 39 789 A1 die ausfahrbare Trennwand erforderlich.

Weiterhin ist aus der JP 2008 105547 A ein Kraftfahrzeug mit einer Sitzbank nach dem Oberbegriff des Anspruchs 1 offenbart. Daneben sind aus der DE 10 2010 022206 A1, DE 699 589 C und der FR 2 874 867 A1 weitere in Trennwandstellung bewegbare Sitze offenbart. Zusätzlich sind aus der US 2005/116522 A1 ein verstellbarer Sitz mit einem beweglichen Ladebodenelement und aus der US 3 703 310 A ein Fahrzeug mit einem in Trennwandstellung bewegbaren Sitz sowie einem abnehmbaren Dachelement offenbart.

Es ist eine Aufgabe der Erfindung ein Kraftfahrzeug mit einer Sitzbank anzugeben, das auf einfache, kostengünstige und platzsparende Weise eine Abtrennung zwischen einem vorderen und einem hinteren Bereich im Kraftfahrzeug ermöglicht.

Die Lösung der Aufgabe erfolgt durch ein Kraftfahrzeug mit einer Sitzbank nach Anspruch 1.

Erfindungsgemäß sind die Lehne und die Sitzfläche also derart verstellbar, beispielsweise schwenkbar, dass beide in eine annähernd vertikale Position gebracht werden können. In der vertikalen Position sind die Rückseite der Lehne und die Unterseite der Sitzfläche in Fahrtrichtung nach hinten ausgerichtet. Die Lehne und die Sitzfläche sind geometrisch so ausgebildet, dass die Oberkante der Lehne in der Trennwandstellung das Dach des Fahrzeuges an dessen Innenseite erreicht, also üblicherweise mit einem Dachhimmel in Verbindung steht. Der Kontakt zum Dachhimmel kann auch über flache Zwischenelemente, wie zum Beispiel Dichtlippen erfolgen. Die Trennwand aus Lehne und Sitzfläche trennt aber im Wesentlichen die gesamte Höhe des Innenraumes des Kraftfahrzeuges, vom Boden bis zum Dach.
Weiterbildungen der Erfindung sind in den abhängigen Ansprüchen, der Beschreibung sowie den beigefügten Zeichnungen angegeben.

Vorzugsweise ist die Lehne über eine erste Schwenkachse im hinteren Bereich der Sitzfläche an der Sitzfläche schwenkbar gelagert und die Sitzfläche über eine zweite Schwenkachse im vorderen Bereich der Sitzfläche am Fahrzeugrahmen schwenkbar gelagert und die Sitzfläche und die Lehne sind um die erste und zweite Schwenkachse in die Trennwandstellung schwenkbar. Eine derartige Anordnung von Schwenkachsen stellt einen kostengünstigen Verstellmechanismus für die Verstellung der Lehne und der Sitzfläche in die genannten vertikalen Positionen der Trennwandstellung dar. Zudem kann die erste Schwenkachse in der Normalstellung auch dazu genutzt werden, die Neigung der Lehne so einzustellen, dass ein komfortables, den individuellen Bedürfnissen eines Fahrzeuginsassen gerechtes Sitzen auf der Sitzbank ermöglicht wird.
Vorzugsweise erstreckt sich die Lehnenoberkante über die gesamte Breite des Daches des Kraftfahrzeuges und die Lehnenoberkante ist in der Trennwandstellung über die gesamte Breite mit dem Dach des Kraftfahrzeuges in Kontakt. Die Lehnenoberkante deckt daher im Bereich des Dachhimmels im Wesentlichen die gesamte Breite des Kraftfahrzeuges ab wodurch eine bessere Abtrennung gewährleistet ist.

Vorzugsweise sind die Sitzfläche und die Lehne so ausgebildet, dass in der Trennwandstellung die Trennwand den gesamten Querschnitt des Kraftfahrzeuges überdeckt. Die Trennwand, die aus der Lehne und der Sitzfläche gebildet wird, reicht also sowohl in der Höhe vom Boden bis zur Decke des Fahrzeuges, als auch in der Breite von einer Seite des Fahrzeuges bis zur gegenüberliegenden Seite, beispielsweise von einer B-Säule zur gegenüberliegenden B-Säule. Die Sitzfläche und die Lehne sind so geformt, dass die Kontur der Trennwand im Wesentlichen mit der Kontur des Fahrzeug-Innenraumes übereinstimmt und dadurch den gesamten Querschnitt abdeckt. Hierdurch wird eine optimale Trennwirkung der Trennwand sichergestellt.

Vorteilhaft ist im Innenraum des Kraftfahrzeuges zumindest ein Fixierelement angeordnet, das dazu eingerichtet ist, in der Trennwandstellung die Lehne und/oder die Sitzfläche in der zumindest annähernd vertikalen Position am Kraftfahrzeug zu fixieren. Hierdurch kann ein sicherer Halt der Trennwand in der aufrechten Position auch während der Fahrt sichergestellt werden.

Gemäß einer Ausführungsform der Erfindung umfasst das Dach des Kraftfahrzeuges ein abnehmbares oder verschiebbares oder faltbares Dachelement, das in der Trennwandstellung der Sitzbank in Fahrtrichtung hinter der Trennwand liegt. Ein hinterer Teil des Daches ist also abnehmbar oder als Ganzes oder in Segmenten nach vorne oder nach hinten verschiebbar bzw. faltbar, beispielsweise wie bei einem bekannten "sliding folding roof". Hierdurch entsteht durch Aufrichten von Sitzfläche und Lehne zur Trennwandstellung und Abnehmen bzw. Verschieben oder Falten des hinteren Dachelementes ein Fahrzeug mit hinten offener Ladefläche, entsprechend einem bekannten "Pickup".

Gemäß einer weiteren Ausführungsform umfasst die Lehne zumindest einen transparenten Bereich, der so ausgebildet ist, dass die Sicht aus dem Bereich in Fahrtrichtung vor der Trennwand in den Bereich in Fahrtrichtung hinter der Trennwand ermöglicht ist. Dadurch ist die Sicht in den hinteren Fahrzeugbereich, also beispielsweise in den Laderaum, trotz aufgerichteter Trennwand möglich.

Bevorzugt umfasst die Lehne eine Lehnenrückwand und die Lehnenrückwand ist in dem zumindest einen transparenten Bereich aus transparentem Material, insbesondere aus Glas oder Kunststoff ausgebildet. Auf diese Weise bietet die Lehne die Steifigkeit einer Lehnenrückwand, erlaubt aber dennoch den Blick in den Bereich hinter der Trennwand.

Bevorzugt umfasst die Lehne eine Polsterung.

In dem zumindest einen transparenten Bereich ist die Polsterung weiter bevorzugt entfernbar, insbesondere wegklappbar, beispielsweise in Fahrtrichtung nach vorn wegklappbar. Hierdurch entsteht auch bei intransparenter Ausführung der Polsterung ein transparenter Bereich in der Lehne, sobald die Polsterung entfernt bzw. weggeklappt ist.

In einer anderen Ausführungsform ist in dem zumindest einen transparenten Bereich die Polsterung von einem transparenten, luftgefüllten Polster gebildet. Hierdurch ist der Blick durch die Trennwand ohne Entfernen der Polsterung bzw. eines Teiles der Polsterung möglich.

Die Erfindung wird im Folgenden beispielhaft unter Bezugnahme auf die Zeichnungen beschrieben.
- Fig. 1: ist eine schematische Darstellung einer erfindungsgemäßen Sitzbank in einer Seitenansicht.
- Fig. 2a - 2c: sind schematische Darstellungen der Sitzbank gemäß Fig. 1, die einen Übergang von der Normalstellung in Fig. 2a zur Trennwandstellung in Fig. 2c zeigen.
- Fig. 3: ist eine schematische Darstellung die ein erfindungsgemäßes Kraftfahrzeug mit Sitzbank im Querschnitt zeigt.
- Fig. 4: ist eine schematische Ablaufdarstellung, die die Anhebung eines Ladebodenelementes in 3 Phasen zeigt.

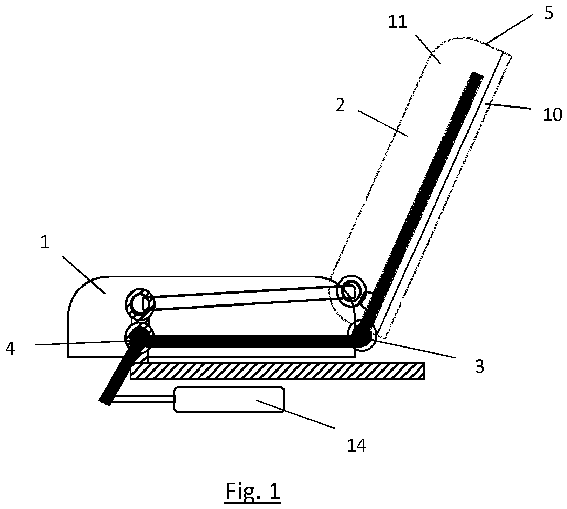

In Fig. 1 ist schematisch eine erfindungsgemäße Sitzbank in einer Seitenansicht gezeigt. Die Sitzbank umfasst eine Sitzfläche 1 und eine Lehne 2. Dabei ist die Lehne 2 relativ zur Sitzfläche 1 um die erste Schwenkachse 3 im hinteren Bereich der Sitzfläche 1 schwenkbar. Die Sitzfläche 1 selbst ist über die zweite Schwenkachse 4 am Fahrzeugrahmen schwenkbar gelagert. Lehne 2 und Sitzfläche 1 sind derart miteinander verbunden, dass eine Aktuierung über den Stellmotor 14 das Aufrichten der Lehne 2 und der Sitzfläche 1 in annähernd vertikale Position bewirkt. Dafür sind im Stand der Technik verschiedene Klappmechanismen bekannt, wie etwa die dargestellte Verwendung eines Betätigungsstabes oder auch die Verwendung eines Ketten- oder Zahnriemen-Systems.

Die Lehne 2 setzt sich aus einer Lehnenrückwand 10 und einer Polsterung 11 zusammen. Die Lehnenoberkante 5 befindet sich am oberen Ende der Lehne 2, das der ersten Schwenkachse 3 gegenüber liegt.

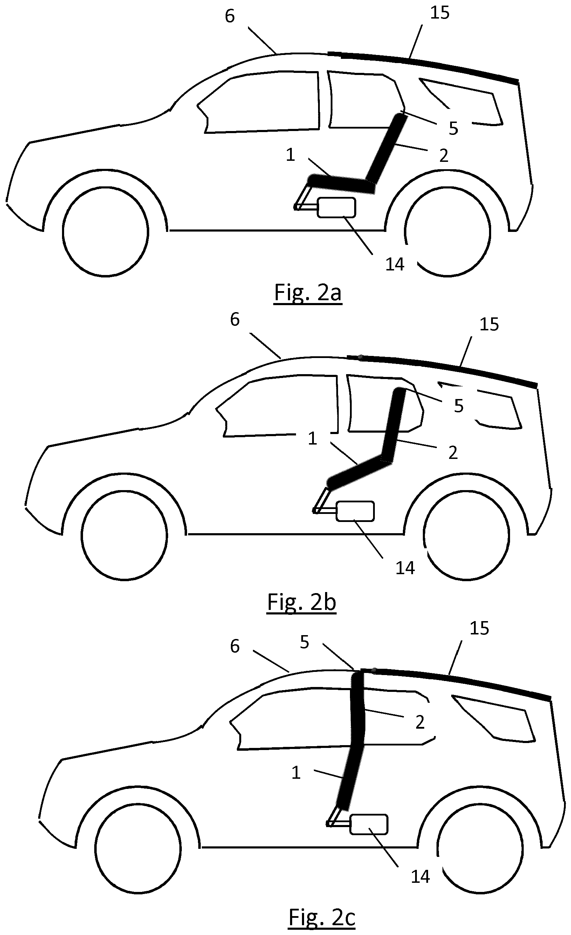

Fig. 2a - 2c sind schematische Darstellungen der erfindungsgemäßen Sitzbank in einem Kraftfahrzeug, die einen Übergang von der Normalstellung in Fig. 2a über eine Zwischenstellung wie in Fig. 2b dargestellt zur Trennwandstellung der Fig. 2c zeigen. In der Trennwandstellung, die in Fig. 2c dargestellt ist, verläuft die Trennwand aus Sitzfläche 1 und Lehne 2 bis zum Dach 6 des Fahrzeuges. In Fahrtrichtung hinter der Kontaktlinie zwischen Lehnenoberkante 5 und Dach 6 befindet sich ein abnehmbares oder verschiebbares (komplett oder beispielsweise in Segmenten) Dachelement 15. In der dargestellten Ausführung ist der gesamte hintere Dachbereich bis zur Heckklappe des Fahrzeuges abnehmbar oder komplett oder in Segmenten verschiebbar. In umgekehrter Richtung lässt sich die Trennwand mit Hilfe des Stellmotors 14 auch wieder aus der Trennwandstellung der Fig. 2c über die Zwischenstellung der Fig. 2b in die Normalstellung, also die Ausbildung der üblichen Sitzfläche 1 und Lehne 2 der Fig. 2a überführen.

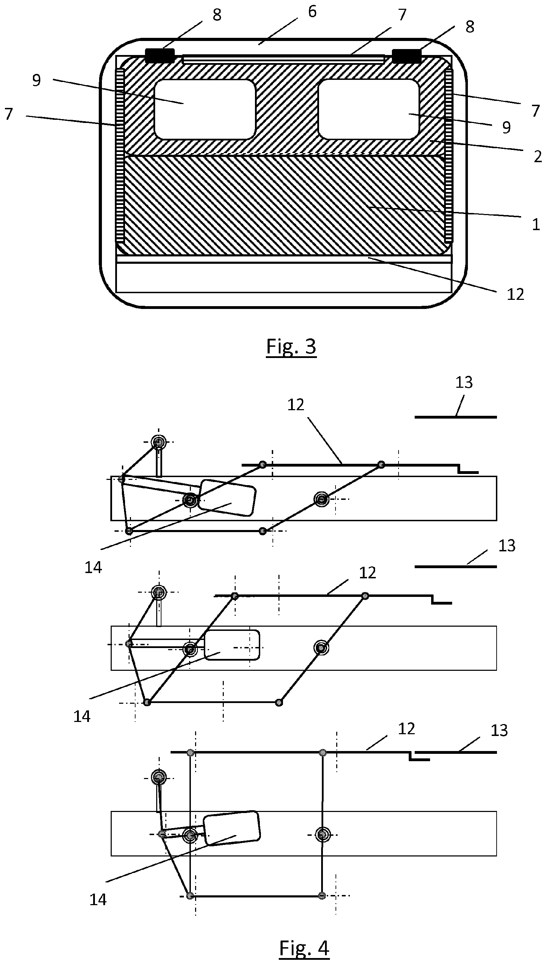

Fig. 3 ist eine schematische Darstellung, die ein erfindungsgemäßes Kraftfahrzeug mit Sitzbank im Querschnitt zeigt. Dabei wird durch die Sitzfläche 1 und die Lehne 2 im Wesentlichen der gesamte Querschnitt des Fahrzeuges abgedeckt. Im unteren Bereich befindet sich das nunmehr angehobene Ladebodenelement 12, das sich in der dargestellten Trennwandstellung in selber Höhe mit einem ohnehin vorhandenen Ladeboden 13 befindet. In der Lehne 2 sind transparente Bereiche 9 dadurch ausgebildet, dass diese Bereiche keine Polsterung oder eine transparente Polsterung aufweisen und eine eventuell vorhandene Lehnenrückwand transparent ausgeführt ist. Die Lehne 2 ist mit Hilfe von Fixierelementen 8 am Dach 6 des Fahrzeuges fixiert. Weiters sind Dichtelemente 7 zwischen der Sitzfläche 1 bzw. der Lehne 2 und dem Rahmen des Kraftfahrzeuges, also dem Dach, den Seitenwänden und eventuell -nicht dargestellt- dem Ladebodenelement 12 angeordnet. Dadurch werden die Kontaktflächen zwischen der Trennwand und dem Fahrzeug abgedichtet.

Fig. 4 zeigt schließlich die Kinematik der Ladebodenanhebung in einer schematischen Ablaufdarstellung. In der obersten Darstellung der Fig. 4 befindet sich das Ladebodenelement 12 noch deutlich unter dem normalen Ladeboden 13, der hinter der Sitzbank den Boden eines Laderaumes bildet. Über den Stellmotor 14 und entsprechend am Fahrzeug gelagerte Gestänge erfolgt die Anhebung des Ladebodenelementes 12 auf die Höhe des Ladebodens 13, wie unten in Fig. 4 dargestellt.

Die Erfindung stellt somit ein Kraftfahrzeug mit einer Sitzbank dar, das auf einfache, kostengünstige und platzsparende Weise eine Abtrennung zwischen einem vorderen und einem hinteren Bereich im Kraftfahrzeug ermöglicht.

### Bezugszeichenliste

- 1: Sitzfläche
- 2: Lehne
- 3: erste Schwenkachse
- 4: zweite Schwenkachse
- 5: Lehnenoberkante
- 6: Dach
- 7: Dichtelement
- 8: Fixierelement
- 9: transparenter Bereich
- 10: Lehnenrückwand
- 11: Polsterung
- 12: Ladebodenelement
- 13: Ladeboden
- 14: Stellmotor
- 15: Dachelement

## Patentansprüche

1. Kraftfahrzeug mit einer Sitzbank, die eine in einer Normalstellung annähernd horizontale Sitzfläche (1) und eine in der Normalstellung annähernd vertikale Lehne (2) umfasst, wobei die Sitzfläche (1) und die Lehne (2) in eine Trennwandstellung verstellbar sind, in der die Sitzfläche (1) und die Lehne (2) eine zumindest annähernd vertikale Position einnehmen und die Lehne (2) oberhalb der Sitzfläche (1) angeordnet ist, wobei in der Trennwandstellung die Lehnenoberkante (5) mit dem Dach (6) des Kraftfahrzeuges in Kontakt ist, so dass die Lehne (2) zusammen mit der Sitzfläche (1) eine Trennwand bildet, die den Bereich in Fahrtrichtung hinter der Trennwand vom Bereich in Fahrtrichtung vor der Trennwand abtrennt, wobei die Trennwand, in der Trennwandstellung, den Bereich in Fahrtrichtung hinter der Trennwand vom Bereich in Fahrtrichtung vor der Trennwand, mittels eines oder mehrerer Dichtelemente die zwischen der Sitzfläche (1) und der Lehne (2) einerseits und dem Rahmen des Kraftfahrzeuges, also dem Dach und den Seitenwänden andererseits, angeordnet sind, annähernd schalldicht, wasserdicht und/oder luftdicht abtrennt, **dadurch gekennzeichnet, dass** ein flaches Ladebodenelement (12), das sich in der Normalstellung der Sitzbank im Wesentlichen unter der Sitzfläche (1) befindet, in der Trennwandstellung der Sitzbank angehoben ist, so dass das Ladebodenelement (12) in der Trennwandstellung in einer Ebene mit einem Ladeboden (13) des Kraftfahrzeuges liegt, wobei die Sitzfläche (1) und die Lehne (2) über einen Stellmotor (14) in die Trennwandstellung verstellbar sind, wobei über den Stellmotor (14) das Ladebodenelement (12) anhebbar ist, zeitgleich während die Sitzfläche (1) und die Lehne (2) in die Trennwandstellung verstellbar sind.

2. Kraftfahrzeug mit einer Sitzbank nach Anspruch 1,
**dadurch gekennzeichnet, dass** die Lehne (2) über eine erste Schwenkachse (3) im hinteren Bereich der Sitzfläche (1) an der Sitzfläche (1) schwenkbar gelagert ist und die Sitzfläche (1) über eine zweite Schwenkachse (4) im vorderen Bereich der Sitzfläche (1) am Fahrzeugrahmen schwenkbar gelagert ist und dass die Sitzfläche (1) und die Lehne (2) um die erste und zweite Schwenkachse (3, 4) in die Trennwandstellung schwenkbar sind.

3. Kraftfahrzeug mit einer Sitzbank nach Anspruch 1,
**dadurch gekennzeichnet, dass** sich die Lehnenoberkante (5) über die gesamte Breite des Daches (6) des Kraftfahrzeuges erstreckt und die Lehnenoberkante (5) in der Trennwandstellung über die gesamte Breite mit dem Dach (6) des Kraftfahrzeuges in Kontakt ist.

4. Kraftfahrzeug mit einer Sitzbank nach Anspruch 1,
**dadurch gekennzeichnet, dass** die Sitzfläche (1) und die Lehne (2) so ausgebildet sind, dass in der Trennwandstellung die Trennwand den gesamten Querschnitt des Kraftfahrzeuges überdeckt.

5. Kraftfahrzeug mit einer Sitzbank nach Anspruch 1,
**dadurch gekennzeichnet, dass** im Innenraum des Kraftfahrzeuges zumindest ein Fixierelement (8) angeordnet ist, das dazu eingerichtet ist, in der Trennwandstellung die Lehne (2) und/oder die Sitzfläche (1) in der zumindest annähernd vertikalen Position am Kraftfahrzeug zu fixieren.

6. Kraftfahrzeug mit einer Sitzbank nach Anspruch 1,
**dadurch gekennzeichnet, dass** die Lehne (2) zumindest einen transparenten Bereich (9) umfasst, der so ausgebildet ist, dass die Sicht aus dem Bereich in Fahrtrichtung vor der Trennwand in den Bereich in Fahrtrichtung hinter der Trennwand ermöglicht ist.

7. Kraftfahrzeug mit einer Sitzbank nach Anspruch 6,
**dadurch gekennzeichnet, dass** die Lehne (2) eine Lehnenrückwand (10) umfasst und die Lehnenrückwand (10) in dem zumindest einen transparenten Bereich (9) aus transparentem Material, insbesondere aus Glas oder Kunststoff ausgebildet ist.

8. Kraftfahrzeug mit einer Sitzbank nach Anspruch 6,
**dadurch gekennzeichnet, dass** die Lehne (2) eine Polsterung (11) umfasst

9. Kraftfahrzeug mit einer Sitzbank nach Anspruch 8,
**dadurch gekennzeichnet, dass** in dem zumindest einen transparenten Bereich (9) die Polsterung (11) entfernbar, insbesondere wegklappbar ist.

10. Kraftfahrzeug mit einer Sitzbank nach Anspruch 8,
**dadurch gekennzeichnet, dass** in dem zumindest einen transparenten Bereich (9) die Polsterung (11) von einem transparenten, luftgefüllten Polster gebildet ist.

## Claims

1. Motor vehicle with a seating bench which comprises a seat surface (1) which is approximately horizontal in a normal position and a backrest (2) which is approximately vertical in the normal position, wherein the seat surface (1) and the backrest (2) are adjustable into a partition position in which the seat surface (1) and the backrest (2) adopt an at least approximately vertical position and the backrest (2) is arranged above the seat surface (1), wherein the backrest upper edge (5) is in contact with the roof (6) of the motor vehicle in the partition position, such that the backrest (2) together with the seat surface (1) forms a partition which separates the region behind the partition in the direction of travel from the region in front of the partition in the direction of travel, wherein the partition separates the region behind the partition in the direction of travel from the region in front of the partition in the direction of travel, by means of one or more sealing elements which are arranged between the seat surface (1) and the backrest (2) on the one hand, and the frame of the motor vehicle, i.e. the roof and the side walls, on the other hand, in an approximately soundproof, watertight and/or airtight manner in the partition position, **characterized in that** a flat loading floor element (12) which, in the normal position of the seating bench, is substantially located under the seat surface (1) is raised in the partition position of the seating bench such that the loading floor element (12) lies in one plane with a loading floor (13) of the motor vehicle in the partition position, wherein the seat surface (1) and the backrest (2) are adjustable into the partition position via a servomotor (14), wherein the loading floor element (12) is raisable via the servomotor (14), at the same time as the seat surface (1) and the backrest (2) are adjustable into the partition position.

2. Motor vehicle with a seating bench according to Claim 1,
**characterized in that** the backrest (2) is mounted pivotably on the seat surface (1) via a first pivot axis (3) in the rear region of the seat surface (1) and the seat surface (1) is mounted pivotably on the vehicle frame via a second pivot axis (4) in the front region of the seat surface (1), and **in that** the seat surface (1) and the backrest (2) are pivotable about the first and second pivot axes (3, 4) into the partition position.

3. Motor vehicle with a seating bench according to Claim 1,
**characterized in that** the backrest upper edge (5) extends over the entire width of the roof (6) of the motor vehicle, and the backrest upper edge (5) is in contact over the entire width with the roof (6) of the motor vehicle in the partition position.

4. Motor vehicle with a seating bench according to Claim 1,
**characterized in that** the seat surface (1) and the backrest (2) are designed in such a manner that the partition covers the entire cross section of the motor vehicle in the partition position.

5. Motor vehicle with a seating bench according to Claim 1,
**characterized in that** at least one fixing element (8) is arranged in the interior space of the motor vehicle, said fixing element being designed to fix the backrest (2) and/or the seat surface (1) in the at least approximately vertical position to the motor vehicle in the partition position.

6. Motor vehicle with a seating bench according to Claim 1,
**characterized in that** the backrest (2) comprises at least one transparent region (9) which is designed in such a manner that the view from the region in front of the partition in the direction of travel into the region behind the partition in the direction of travel is made possible.

7. Motor vehicle with a seating bench according to Claim 6,
**characterized in that** the backrest (2) comprises a backrest rear wall (10), and the backrest rear wall (10) is formed from transparent material, in particular from glass or plastic, in the at least one transparent region (9).

8. Motor vehicle with a seating bench according to Claim 6,
**characterized in that** the backrest (2) comprises upholstery (11).

9. Motor vehicle with a seating bench according to Claim 8,
**characterized in that** the upholstery (11) can be removed, in particular can be folded away, in the at least one transparent region (9).

10. Motor vehicle with a seating bench according to Claim 8,
**characterized in that** the upholstery (11) is formed by a transparent, air-filled cushion, in the at least one transparent region (9).

## Revendications

1. Véhicule automobile doté d'un banc comprenant une surface de siège (1) approximativement horizontale dans une position normale et un dossier (2) approximativement vertical dans la position normale, dans lequel la surface de siège (1) et le dossier (2) peuvent être réglés dans une position de cloison dans laquelle la surface de siège (1) et le dossier (2) adoptent une position au moins approximativement verticale et le dossier (2) est disposé au-dessus de la surface de siège (1), dans lequel, dans la position de cloison, le bord supérieur de dossier (5) est en contact avec le toit (6) du véhicule automobile de sorte que le dossier (2) forme avec la surface de siège (1) une cloison séparant la partie derrière la cloison, vue dans le sens de la marche, de la partie devant la cloison, vue dans le sens de la marche, dans lequel la cloison, dans la position de cloison, sépare de manière approximativement insonorisée, étanche à l'eau et/ou étanche à l'air la partie derrière la cloison, vue dans le sens de la marche, de la partie devant la cloison, vue dans le sens de la marche, au moyen d'un ou de plusieurs éléments d'étanchéité disposés entre la surface de siège (1) et le dossier (2) d'une part et le châssis du véhicule automobile, donc du toit et des parois latérales d'autre part, **caractérisé en ce qu'**un élément de plateau de chargement plat (12), qui se trouve dans la position normale du banc substantiellement sous la surface de siège (1), est relevé dans la position de cloison du banc de sorte que l'élément de plateau de chargement (12) dans la position de cloison est situé dans un plan avec un plateau de chargement (13) du véhicule automobile, la surface de siège (1) et le dossier (2) étant réglables dans la position de cloison par un servomoteur (14), le servomoteur (14) permettant de relever l'élément de plateau de chargement (12) en même temps que la surface de siège (1) et le dossier (2) peuvent être réglés dans la position de cloison.

2. Véhicule automobile doté d'un banc selon la revendication 1, **caractérisé en ce que** le dossier (2) est monté pivotant sur la surface de siège (1) par l'intermédiaire d'un premier axe de pivotement (3) dans la partie arrière de la surface de siège (1), et la surface de siège (1) est montée pivotante sur le châssis de véhicule par l'intermédiaire d'un deuxième axe de pivotement (4) dans la partie avant de la surface de siège (1), et **en ce que** la surface de siège (1) et le dossier (2) peuvent pivoter autour des premier et deuxième axes de pivotement (3, 4) dans la position de cloison.

3. Véhicule automobile doté d'un banc selon la revendication 1, **caractérisé en ce que** le bord supérieur de dossier (5) s'étend sur toute la largeur du toit (6) du véhicule automobile, et le bord supérieur de dossier (5) est en contact avec le toit (6) du véhicule automobile sur toute la largeur, dans la position de cloison.

4. Véhicule automobile doté d'un banc selon la revendication 1, **caractérisé en ce que** la surface de siège (1) et le dossier (2) sont réalisés de telle sorte que dans la position de cloison, la cloison recouvre toute la section transversale du véhicule automobile.

5. Véhicule automobile doté d'un banc selon la revendication 1, **caractérisé en ce qu'**à l'intérieur du véhicule automobile est disposé au moins un élément de fixation (8) agencé pour fixer au véhicule automobile, dans la position de cloison, le dossier (2) et/ou la surface de siège (1) dans la position au moins approximativement verticale.

6. Véhicule automobile doté d'un banc selon la revendication 1, **caractérisé en ce que** le dossier (2) comprend au moins une partie transparente (9) réalisée de telle sorte qu'il est possible de voir depuis la partie devant la cloison, vue dans le sens de la marche, la partie devant la cloison, vue dans le sens de la marche.

7. Véhicule automobile doté d'un banc selon la revendication 6, **caractérisé en ce que** le dossier (2) comprend un panneau arrière de dossier (10) et le panneau arrière de dossier (10) est réalisé dans un matériau transparent, en particulier en verre ou en plastique, dans ladite au moins une partie transparente (9) .

8. Véhicule automobile doté d'un banc selon la revendication 6, **caractérisé en ce que** le dossier (2) comprend un rembourrage (11).

9. Véhicule automobile doté d'un banc selon la revendication 8, **caractérisé en ce que** dans ladite au moins une partie transparente (9), le rembourrage (11) peut être retiré, en particulier escamoté.

10. Véhicule automobile doté d'un banc selon la revendication 8, **caractérisé en ce que** dans ladite au moins une partie transparente (9), le rembourrage (11) est formé à partir d'un capitonnage transparent rempli d'air.
